# EUROPEAN PATENT APPLICATION

(11) **EP 4 539 195 A1**
(43) Date of publication of application: **16.04.2025**
(21) Application number: 23824203.6
(22) Date of filing: 13.06.2023
(51) Int. Cl.: H01M 10/42, H01M 10/48, H04L 9/40, G01R 31/3842, G01R 19/00, G01R 19/165, G01R 31/36, G01R 31/396, G01R 31/374, G01R 31/56

(54) **ESS SECURITY MANAGEMENT SYSTEM**

(30) Priority: 13.06.2022 KR 20220071722
(71) Applicant: Standard Energy Inc., Yuseong-gu, Daejeon 34014 (KR)
(72) Inventor: LEE, Dong Young, Daejeon 34014 (KR); KIM, Bu Gi, Daejeon 34014 (KR)
(74) Representative: Murgitroyd & Company
(86) International application number: PCT/KR2023/008109
(87) International publication number: WO 2023/243987

(57) **Abstract**

The present disclosure relates to an ESS security management system comprising: a monitoring means for observing an ESS state; and a security means for blocking or stopping an ESS operation of other domains separate from a network switch with respect to unauthorized access or abnormal state of an ESS and, more specifically, to an ESS security management system for safely managing the system through multi-level network management in order to maintain ESS network security.

## Description

### TECHNICAL FIELD

The present disclosure relates to an ESS security management system, and more particularly to an ESS security management system that securely manages a system through multi-level network management to maintain ESS network security.

### BACKGROUND ART

Unless otherwise indicated in this specification, the contents described in this section are not the prior art to the claims of this application, and inclusion in this section does not constitute the prior art.

In general, an ESS may be subject to issues such as fire or explosion if the ESS is operated in a state of deviating from operating conditions thereof.

The operating conditions of the ESS include the environmental temperature, the battery temperature, the battery voltage, and the charge/discharge condition. In this process, abnormality may occur in the ESS, and other abnormalities may occur due to hacking, disasters, accidents, aging, etc.

The operation of ESS is usually carried out remotely over a network. However, if the operating conditions are incorrectly entered due to network hacking, this may lead to accidents beyond the operating conditions.

Therefore, it is necessary to manage security through monitoring management, etc. in order to solve problems caused by abnormal phenomena of the ESS, especially hacking or malfunction of networking.

However, a security management system applied to the ESS has not been properly proposed and applied.

### DISCLOSURE

### TECHNICAL TASK

The present disclosure aims to solve the above problems such that an ESS can be operated safely and abnormalities can be detected in advance.

Therefore, it is an object of the present disclosure to provide a security management system that manages the state of an ESS on multiple levels.

It is another object of the present disclosure to provide an ESS security management system that secures safety by blocking or stopping the operation of an ESS network in response to unauthorized access to or abnormal states of an ESS.

The objects of the present disclosure are not limited to the above objects, but are to be understood to include all objects that can be inferred from the detailed description of the present disclosure or the configuration of the present disclosure described in the claims or all objects that can be achieved by the description or technical idea of the present disclosure.

### TECHNICAL SOLUTIONS

In order to accomplish the above objects, the present disclosure provides an ESS security management system having a monitoring means configured to observe the state of an ESS and a security means configured to block or stop the operation of the ESS in another domain separate from a network switch in response to unauthorized access to or an abnormal state of the ESS.

In a preferred embodiment of the present disclosure, the monitoring means may include two or more monitoring levels having different monitoring ranges, the monitoring levels being connected to each other via a network communication line, the monitoring levels having functions of transmitting and receiving signals or giving or enforcing commands.

In a preferred embodiment of the present disclosure, the number of the monitoring levels may be four.

In a preferred embodiment of the present disclosure, the monitoring levels may include level 1 including a module BMS directly connected to a plurality of battery cells, level 2 including a pack BMS in which two or more module BMSs of level 1 are connected to each other, level 3 including two or more system BMSs in each of which two or more pack BMSs of level 2 are connected to each other and including a power management system (PMS) configured to control one or more of heating and cooling and an air conditioner, and level 4 including one or more of level 3 and including a top-level energy management system (EMS) configured to control one or more of an ESS, a power system, a power grid, a power plant, and a load in various regions.

In a preferred embodiment of the present disclosure, level 1 and level 2 may regulate the battery, and, in the safest state, the current may be minimized and the voltage may be fixed within a battery safe voltage range.

In a preferred embodiment of the present disclosure, the module BMS of level 1 may be configured such that 5 to 50 battery cells, more preferably 10 to 20 battery cells, are connected to each other in series, and may perform a function of monitoring battery cell states of one or more of the voltage, current, and temperature of the battery cells, performing cell balancing, collecting and checking state information data of the battery cells, and transmitting the collected information data of the battery cells to level 2, which is a higher level.

In a preferred embodiment of the present disclosure, the pack BMS of level 2 may include a function of receiving information data about the battery cells from one or more module BMSs of level 1, performing state determination and transmitting state determination result data to level 3, which is a higher level, and receiving a command for performing balancing for the battery cells from the system BMS of level 3 and commanding execution thereof to the module BMS of level 1, which is a lower level.

In a preferred embodiment of the present disclosure, level 3 may include one or more system BMSs to constitute a PMS, and the PMS may control or communicate with one or more PCSs and may include one or more PCSs. Each system BMS may include a function of analyzing information transmitted from the pack BMS of each lower level to determine whether to perform balancing of the battery cells, transmitting the same to each pack BMS of level 2 to perform a balancing command, and commanding a switch connected to the pack BMS to be turned on/off.

In a preferred embodiment of the present disclosure, the PMS of level 3 may include a function of receiving information from the PCS and one or more system BMSs, receiving information about an abnormal state including an alarm situation and having an authority to reset an alarm, receiving information of each pack BMS enclosure unit belonging to the system BMS to perform activation and deactivation for maintaining the normal state of a battery system, such as balancing, and transmitting the collected information to the EMS.

In a preferred embodiment of the present disclosure, level 4 may include an EMS including one or more PMSs, and may include a function of checking cooling and heating, load, and grid states connected to the EMS, performing an ESS utilization strategy, and transmitting a necessary command to the PMSs of a lower level connected in parallel, each EMS transmitting a command to the PCS through the plurality of PMSs.

In addition, the present disclosure provides an ESS security management system having a monitoring means configured to observe a state of an ESS and a security means configured to block or stop an operation of the ESS in another domain separate from a network switch in response to unauthorized access to or an abnormal state of the ESS, the ESS security management system including:
a first battery management system configured to manage a plurality of battery cells;
a second battery management system located upstream of the first battery management system, the second battery management system being configured to provide control to the first battery management system;
a network communication line configured to provide signal connection between a power grid, a battery, the second battery management system, and the first battery management system; and
a dual domain switch control system connected to the network communication line, the dual domain switch control system being configured to selectively block unauthorized access to or abnormal operation of at least one of the first battery management system and the second battery management system.

In a preferred embodiment of the present disclosure, the first battery management system may include one or more module BMSs, and the first battery management system may include a pack BMS including one or more module BMSs, a system BMS including one or more pack BMSs in addition thereto, or a PMS including one or more system BMSs in addition thereto.

In a preferred embodiment of the present disclosure, the dual domain switch control system may include: a network switch operated in response to a command transmitted through the network communication line, the network switch being configured to control at least one of the first battery management system and the second battery management system; and
a physical switch configured to detect an abnormal operation related to potential unauthorized access and to physically block or prevent power from being applied to at least one of the first battery management system and the second battery management system without transmitting a command through the network communication line.

In addition, the present disclosure provides an error detection system for ESS security management in an ESS security management system having a monitoring means configured to observe the state of an ESS and a security means configured to block or stop the operation of the ESS in another domain separate from a network switch in response to unauthorized access to the ESS, wherein the error detection system detects a measurement error of a PCS and a BMS including:
measuring and recording the voltage of each battery from a module BMS configured to manage battery cells constituting the ESS and the overall voltage in the PCS;
estimating the overall voltage of the system by accumulating the measured voltages of each battery;
comparing the estimated overall voltage of the system to the measured overall voltage; and
transmitting an error signal if the difference between the two battery voltages of the comparison target is a certain level or more.

In a preferred embodiment of the present disclosure, one or more of measuring and recording the overall battery voltage from the PCS and comparing the overall battery voltages measured from the BMS and the PCS to each other may be further included. The overall battery voltage refers to, but is not limited to, the total voltage of a battery system configured in series or parallel connected to the PCS, and in some embodiments, the voltage of some batteries may be regarded as the overall battery voltage depending on the connection state of the battery system.

In a preferred embodiment of the present disclosure, the system may be applied as one or more of a system for transmitting an error signal when state data including one or more of the temperature and humidity of the battery measured in physical domain 1 and data measured in physical domain 2 exceed a certain level, a system for measuring the amount of current between the physical domains and, if the difference in the amount of current occurs rapidly in a certain period, detecting the same as electric leakage and transmitting an error signal, and a system for accumulating the amount of electric power for a certain period of time and, if the accumulated amount differs from a value recorded by an actual integrating meter, correcting the same.

### ADVANTAGEOUS EFFECTS

The present disclosure may regulate a battery, and, in the safest state, the current may be minimized and the voltage may be fixed within a battery safe voltage range, whereby an ESS may be safely operated.

The present disclosure may regulate a heating and cooling facility and the output, and in the safest state, the temperature may be fixed at a temperature that is safest for the battery and the output may be minimized, whereby the ESS may be economically and safely operated.

The present disclosure has the effect that, when a switch is operated in response to unauthorized access or abnormality, especially unauthorized access, during operation of the ESS, it is impossible to operate the switch over a network, and it is possible to physically block the operation of the switch by applying a plurality of switches and applying an emergency recognition function, thereby achieving security maintenance and hacking prevention.

The effects of the present disclosure are not limited to the above effects, but are to be understood to include all effects that can be inferred from the detailed description of the present disclosure or from the configuration of the present disclosure described in the claims.

### DESCRIPTION OF DRAWINGS

FIGs. 1A and 1B are conceptual views of an embodiment to which an ESS security management system according to the present disclosure is applied, illustratively showing operation state management ranges in different forms when the monitoring level is constituted by level 1 to level 4.
FIG. 2 is an illustrative view showing an open wire state when an abnormal state, open wire, occurs due to loosening of a fastening structure of a busbar in a conventional ESS system.
FIG. 3 is an illustrative view showing an improved open wire state including a step-up circuit according to the present disclosure such that the error occurrence of the ESS system of FIG. 2 can be checked.

### BEST MODE FOR DISCLOSURE

Hereinafter, the present disclosure will be described in more detail as an implementation.

Here, an ESS security management system according to a preferred embodiment will be described in detail with reference to the accompanying drawings.

For reference, in the accompanying drawings and the descriptions thereof, each component is omitted or schematically shown for convenience and clarity, and the size and function of each component is not intended to be a limiting reflection of the actual size and state thereof, but additional functions may be included or some functions may be changed.

The present disclosure relates to an ESS security management system that secures stability by operating security measures against unauthorized access to or abnormal states of an ESS, for example, by turning off switches in other domains such as physical switches in addition to network switches or by fixing the ESS in a specified normal state to operate the ESS safely. Here, the term "normal state" means a state in which the ESS performs charging or discharging within a normal range, and is interpreted to include states of the same or similar degree.

The present disclosure includes an ESS security management system having a monitoring means configured to observe the state of the ESS and a security means configured to block or stop the operation of the ESS in another domain separate from the network switch in response to unauthorized access to or abnormal states of the ESS, whereby the operation state of the ESS is identified and managed.

According to a preferred embodiment of the present disclosure, the monitoring means may include two or more monitoring levels having different monitoring ranges. Preferably, the monitoring levels may be three or more. As an example, four monitoring levels may be provided.

According to a preferred embodiment of the present disclosure, the monitoring levels may to be connected to each other by a network communication line, and may include functions to transmit and receive signals to and from each other or to issue or enforce commands. The operational states may be enforced remotely.

According to a preferred embodiment of the present disclosure, in addition to the network communication line, a physical switch capable of physically disconnecting power may be added to cause the switch to disconnect power under certain conditions. Here, the physical switch may include a power cut-off device of the same function. Therefore, the physical switch may be a switch capable of performing an on/off function by appropriate commands from a connected system.

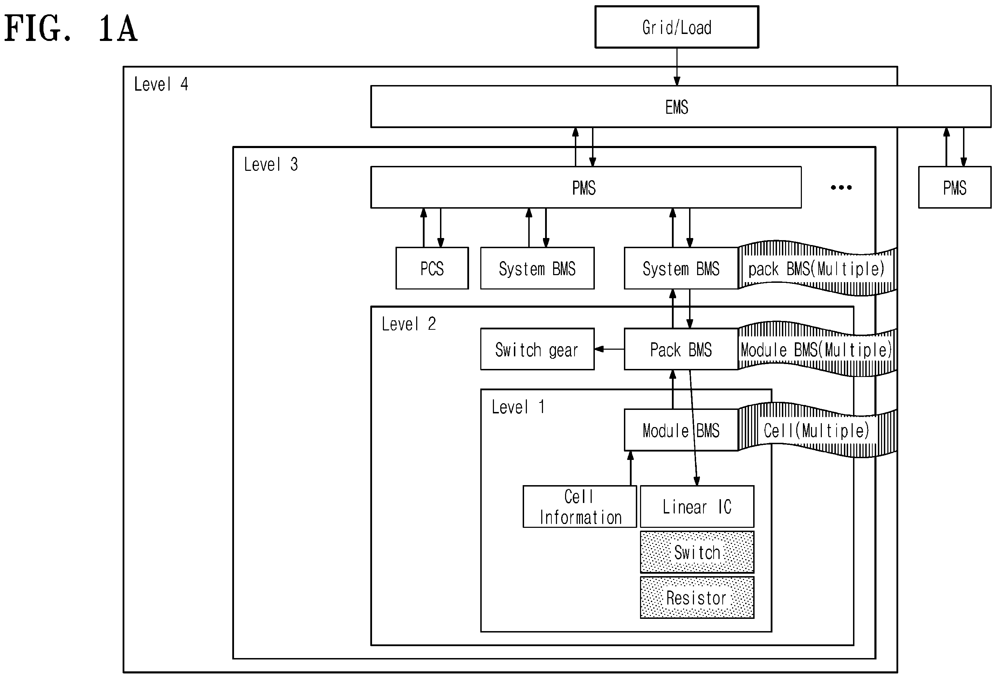

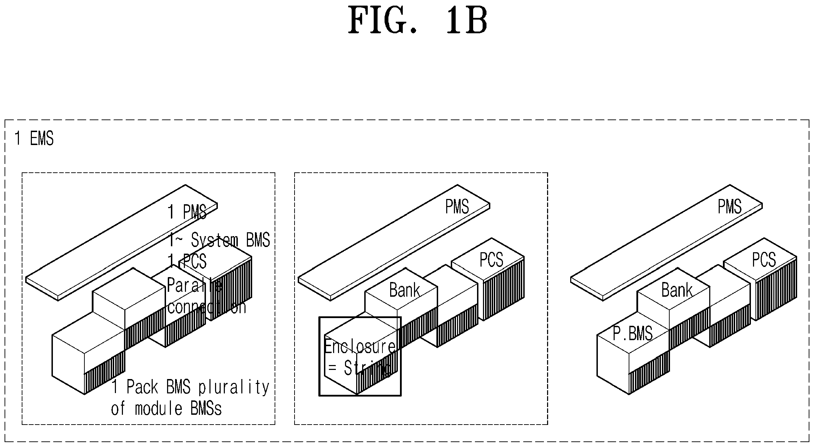

According to a preferred embodiment of the present disclosure, the monitoring level may include four levels. Such a specific example is shown in FIG. 1 (FIGs. 1A and 1B). FIG. 1 is a conceptual view of an embodiment to which the ESS security management system according to the present disclosure is applied, illustratively showing operation state management ranges when the monitoring level is constituted by level 1 to level 4. Here, the level Lv may be configured such that a plurality of sub-levels is connected to constitute a higher level. For example, larger levels may constitute a broader system.

According to a preferred embodiment of the present disclosure, the monitoring level includes level 1 including a module BMS directly connected to one or more battery cells, level 2 including a pack BMS in which one or more module BMSs of level 1 are connected to each other, level 3 including a system BMS in which one or more pack BMSs of level 2 are connected to each other and including a power management system (PMS) in which control related to environmental control such as air conditioning, heating and cooling is performed, and level 4 including one or more of level 3 and including a top-level energy management system (EMS) configured to control one or more of an ESS, a power system, a power grid, a power plant, and a load in various regions.

Thereamong, the levels that perform more specialized functions in the present disclosure may be level 2 and level 3. In these levels, information data collected from the battery in relation to security may be analyzed and determined to determine whether to perform on/off of the physical switch, which is a security device, or to perform actual switching in response to unauthorized access or abnormal states.

In the case of constituting such a monitoring level in four stages, a multi-stage level may be constituted specifically as follows. Such a case is illustrated in FIG. 1.
- Level 1: A BMS directly connected to a battery cell, commonly referred to as a slave BMS, a node BMS, or a module BMS; in the present disclosure, this is the level of a module BMS connected to a plurality of battery cells, and includes one or more module BMSs. Typically, one module BMS may communicate with, measure, or manage 5 to 50 battery cells, more preferably 10 to 20 battery cells. Level 1 is connected to level 2 so as to exchange information with each other.
- Level 2: A composite BMS that ties together level 1 BMSs, commonly referred to as a master BMS; in the present disclosure, this is the level of a pack BMS connected to one or more module BMSs, and includes one or more pack BMSs. Typically, a pack BMS may communicate with, measure, or manage 10 to 100 module BMSs. Level 2, to which a switch gear is connected, may perform communication or control, and is connected to level 3, which will be described later, to exchange information with each other.
- Level 3: A power management system where control of heating and cooling, load, grid, etc. is performed; in the present disclosure, this is the level of a system BMS connected to a plurality of pack BMSs, and may include one or more PMSs (power management systems) , each of which is connected to one or more system BMSs. Typically, a system BMS may include 1 to 20 pack BMSs. One or more strings (battery series connection systems) connected to each pack BMS are managed through one pack BMS, and one or more enclosures are included. Level 3 is connected to level 4, which will be described later, to exchange information with each other.
- Level 4: An energy management system (EMS) at the highest level that controls an ESS and power systems in various regions; in the present disclosure, this is connected to one or more PMSs corresponding to level 3, which is a lower level, and is electrically connected to heating and cooling, grid, and load means.

According to a preferred embodiment of the present disclosure, level 1 and level 2 may regulate the battery, and, in the safest state, the current may be minimized and the voltage may be fixed within a battery safe voltage range.

Here, expressions such as "plural", "a plurality of", and "many" BMSs refer to any number of BMSs, one or more or all of which are connected to each other.

According to a preferred embodiment of the present disclosure, the module BMS of level 1 is configured such that 5 to 50 battery cells are connected to each other in series, and monitors one or more of the voltage of the battery cells, the temperature of the module, and cell balancing, which are states of the battery cells, to collect and check the state information data of the battery cells. In addition, the module BMS may perform a function of transmitting the information data of the battery cells thus collected to level 2, which is a higher level.

According to a preferred embodiment of the present disclosure, level 1 is a node battery management system (n.BMS), e.g., a module BMS, which may measure the state of the voltage, current, temperature, etc. of the battery and compare the same with the recorded values. In addition, level 1 may only execute predetermined commands from the outside, such as whether to perform a balancing operation, or whether to operate a fan or to control an external device through a digital output terminal, such as a relay, and may only transmit measured values and its own operation state to level 2. If an internal error occurs, it is possible to proceed to an emergency mode after outputting an error message, and at this time, the emergency mode may include inter-node switching blocking, balancing blocking, and cooling fan operation. In addition, in an emergency situation, the balancing circuit may be forcibly activated to lower the charge of the battery.

According to a preferred embodiment of the present disclosure, at level 1, it is also possible to constitute the step-up circuit of FIG. 6, which will be described later, to maintain a minimum drive voltage at 2.5 V or more, 3 V or more, or a minimum drive voltage value or more required by the BMS.

According to a preferred embodiment of the present disclosure, the pack BMS of level 2 may include a function of receiving information data about the battery cells from the one or more module BMSs of level 1, performing state determination and transmitting the state determination result data to level 3, which is a higher level, and receiving a command for performing balancing for the battery cells from the system BMS of level 3 and commanding the execution thereof to the module BMS of level 1, which is a lower level. Alternatively, the pack BMS of level 2 may include a function of managing switching gear to perform on/off based on a command from a higher level and performing abnormal state management including communication or connection abnormalities and alarm execution. The switching gear may be connected to a power line connected to a power conversion system (PCS) and a battery module or pack, and may interconnect or disconnect the power line and battery in response to a command from the pack BMS. The interconnection or disconnection process may include a pre-charging process for safety. Level 2 may execute only a predetermined command from the outside (whether to perform the balancing operation) and ignoring other commands, whereby security maintenance is possible. In addition, if there is a meaningful difference between the battery data received from level 1 and its own data (current, voltage, and temperature), it is possible to transmit an error signal. If an internal error occurs, an emergency mode is executed after outputting an error message, and at this time, the emergency mode may include inter-node switching blocking, balancing blocking, and cooling fan operation. In addition, level 1 may be commanded to perform the balancing operation forcibly in an emergency situation, and SoC adjustment may be performed.

According to a preferred embodiment of the present disclosure, level 3 is connected to one or more pack BMSs to constitute a system BMS, and may check the SoC state including the minimum voltage and the maximum voltage of the battery cells and the location of the problematic cells through the battery information received from the module BMS or the pack BMS, may determine whether to perform the balancing operation according to the cell balancing state, and may command the pack BMS to perform the balancing operation for a specific cell. If it is determined that the battery condition is unsafe or abnormal, an emergency strategy may be performed. In addition, the overall voltage, current, and temperature may be cumulatively recorded and transmitted to the PMS of level 3.

According to a preferred embodiment of the present disclosure, level 4 may be configured such that one or more system BMSs are connected to constitute a PMS, and the PMS may be connected to a PCS to communicate with or control the PCS, wherein each system BMS may include a function of analyzing information transmitted from the pack BMS of each lower level to determine whether to perform balancing of the battery cells, transmitting the same to each pack BMS of level 2 to perform a balancing command, and commanding the switch connected to the pack BMS to be turned on/off.

According to the present disclosure, a conventional system directly executes the switch on/off by checking and determining the information of the module BMS in the pack BMS to determine the position of the battery pack and the battery cells to execute the switch operation. However, in the present disclosure, in order to solve the problem caused by the burden of execution of the pack BMS and the error caused thereby, the pack BMS does not perform the checking and determination of the abnormal condition, but determines the abnormal states and determines whether the switch is operated at a higher level. The command subject for such switch operation is the PMS, which is located at a higher level than the pack BMS, preferably at level 3, and manages the system BMS, such that the PMS manages the abnormal state determination and switch operation state, and executes actual commands through the system BMS. In this process, level 2 is only responsible for the execution of simple commands by the command of the system BMS.

According to a preferred embodiment of the present disclosure, the system BMS of level 3 may include functions for managing each pack BMS enclosure constituting one or more strings, receiving detailed battery state reports from the pack BMS to perform activation and deactivation of the enclosure, and receiving low-level information including abnormal states and alarms of the battery and the connection state between the PCS and the switch.

According to a preferred embodiment of the present disclosure, the PMS of level 3 may include a function of receiving information from the PCS and a plurality of system BMSs, receiving information about abnormal states including alarm situations and having the authority to reset alarms, receiving information of each pack BMS enclosure unit belonging to the system BMS to perform activation and deactivation, and transmitting the collected information to the EMS.

According to a preferred embodiment of the present disclosure, level 3 may regulate one or more of the heating and cooling facility and the output, and in the safest state, the temperature may be fixed at a temperature that is safest for the batteries and the output may be minimized.

According to a preferred embodiment of the present disclosure, level 3 is a power management system (PMS), which may perform a charging and discharging strategy based on data transmitted from level 2 or the system BMS and self-measured data, and may estimate and record the SoC of the battery. In addition, level 3 may determine whether the electric load and air conditioner are running. Level 3 may adjust the amount of charge and discharge current according to a predetermined algorithm and transmit the same to level 4. Level 3 may execute only predetermined commands from the outside and ignore other commands to maintain security. If there is a difference between the self-measured data and the current, voltage, temperature, etc. transmitted from level 2, an error signal may be transmitted. In addition, if an internal error occurs, an emergency mode is executed after outputting an error message, wherein the emergency mode may include one or more of the following: inter-node switch blocking, balancing blocking, cooling fan operation, charge/discharge operation stop, electric load use stop, and emergency safety switch operation. In addition, the operation of forcibly returning current back to the grid may be performed to lower the SoC in an emergency situation.

According to a preferred embodiment of the present disclosure, the state of a load and a grid connected to the EMS of level 4 is checked and an ESS utilization strategy is performed to transmit a necessary command to a PMS of a parallel connected lower level, wherein each EMS may perform a function of transmitting commands to a plurality of PMSs. Here, the EMS may include the functions of receiving information from one or more PMSs, receiving information about abnormal states including alarm situations and having the authority to reset alarms, receiving information of each pack BMS enclosure unit belonging to the system BMS to perform activation and deactivation, and transmitting the collected information to the EMS.

According to a preferred embodiment of the present disclosure, level 4 may, for example, monitor the data transmitted from level 3 and the power situation of the power plant to control the situation, and may transmit information such as the expected usage to the power plant. In addition, the power situation may be determined by transmitting the current charging state and the like, and the expected temperature/usage data considering weather information and the like may be transmitted to the PMS. If a usage limit is ordered by the power plant, this may be transmitted to the PMS. If there is a meaningful difference between the self-measured data and the current, voltage, temperature, power usage, etc. transmitted from level 3, an emergency signal may be transmitted. In addition, an external intrusion may be detected, and an emergency signal may be transmitted. In particular, a system that monitors physical intrusion or security threats through communication may be provided. Therefore, if internal abnormality is detected, a customer or management company can be notified of the abnormality. In addition, an additional complementary means configured to detect abnormality in the system due to natural disasters or accidents may be provided.

The ESS security management system according to the present disclosure may preferably have the following features.

A switch gear is connected to the battery via a power line and includes functions such as a contactor, a precharger, and a fuse.

A linear IC may turn on (pattern resistive) switch upon receiving a command from the pack BMS.

In consideration of the low computing power of the pack BMS, the system BMS of level 3 commands the balancing operation based on the data received from the pack BMS. Conventionally, the balancing operation was ordered by the pack BMS, which caused computational difficulties.

The PMS performs temperature control. Conventionally, temperature-related control was performed by the system BMS or a lower level, and it was difficult to achieve a proper control effect because sufficient monitoring was not possible and overall control was not possible.

The present disclosure provides the above features to enable ESS security management and efficient response to unauthorized access or abnormal states.

Meanwhile, as an embodiment, the present disclosure includes an ESS security management system having a monitoring means configured to observe the state of an ESS and a security mean configured to block or stop the operation of the ESS in a different domain separate from a network switch in response to unauthorized access to or abnormal states of the ESS, wherein the ESS security management system includes a dual-domain switch control system that selectively blocks unauthorized access or abnormal operation by constituting, for example, a first battery management system and a second battery management system located upstream thereof to perform control, in a two-level form.

According to a preferred embodiment of the present disclosure, the ESS security management system may include, for example, a first battery management system configured to manage a plurality of battery cells;
a second battery management system located upstream of the first battery management system, the second battery management system being configured to provide control to the first battery management system;
a network communication line configured to provide signal connection between a power grid, the batteries, the second battery management system, and the first battery management system; and
a dual domain switch control system connected to the network communication line, the dual domain switch control system being configured to selectively block unauthorized access to or abnormal operation of at least one of the first battery management system and the second battery management system.

According to a preferred embodiment of the present disclosure, the first battery management system may include a plurality of module BMSs, and the first battery management system may include a pack BMS including a plurality of module BMSs, a system BMS including a plurality of pack BMSs in addition thereto, or a PMS including a plurality of system BMSs in addition thereto.

According to a preferred embodiment of the present disclosure, the dual domain switch control system may include a network switch operated in response to a command transmitted through the network communication line, the network switch being configured to control at least one of the first battery management system and the second battery management system.

In addition, the dual domain switch control system may include a physical switch configured to detect an abnormal operation related to potential unauthorized access and to physically block or prevent power from being applied to at least one of the first battery management system and the second battery management system without transmitting a command through the network communication line.

According to a preferred embodiment of the present disclosure, activation of the physical switch may prevent activation of the network switch, deactivation of the physical switch may allow reactivation of the network switch, or activation of the physical switch may prevent both activation and reactivation of the network switch.

According to a preferred embodiment of the present disclosure, at least one of the first battery management system and the second battery management system may be may be designed so as to be connected to a PCS configured to compare overall battery voltages measured to determine potential unauthorized access or abnormality and to cooperate with the PCS.

According to a preferred embodiment of the present disclosure, at least one of the first battery management system and the second battery management system may be designed to further cooperate with the PCS to compare at least one of measured environmental temperature, humidity, a sudden increase in environmental factors, current power usage for a certain period of time, and overall power usage in order to determine potential unauthorized access or an abnormal operation.

According to a preferred embodiment of the present disclosure, the first battery management system, the second battery management system, the network communication line, and the dual domain switch control system may be implemented in an ESS capable of supporting the use of a vanadium-based battery.

A conventional lithium-ion battery (LIB) has a voltage range of 3 to 5 V, whereas the vanadium-based battery has a lower voltage range of 1.2 to 1.5 V, more preferably 1.25 to 1.45 V, and, in particular, a relatively wide voltage range (window) may be used because an upper limit voltage exists but no lower limit voltage exists. Therefore, the vanadium-based battery has the advantage of being able to be operated at 0 V or in a state of being fully discharged.

In addition, the vanadium-based battery has a reversible charge/discharge reaction, whereby there is no difference between the initial capacity and the later capacity. On the other hand, the load on the BMS to achieve cell balancing is large. That is, batteries are initially connected to each other in parallel to constitute a module, and then modules are connected to each other in series, whereby the system current controlled by the BMS is large, and therefore the load required for the BMS is large.

Therefore, the vanadium-based battery is very suitable for applying the ESS security management system as described above.

According to a preferred embodiment of the present disclosure, in at least one of the first battery management system and the second battery management system, the open circuit voltage (OCV) may decrease as the temperature increases and the OCV may increase as the temperature decreases.

According to a preferred embodiment of the present disclosure, the step of performing the cell balancing by the controller may actively or passively balance the state-of-charge (SoC) values and perform thermal management on the vanadium-based battery to increase the temperature of the vanadium-based battery by at least 5° C in order to observe battery improvement.

According to a preferred embodiment of the present disclosure, thermal management may be performed by the controller in the vanadium-based battery cell so as to maintain an optimal operating efficiency temperature range of 15 to 40 °C and so as not to exceed 50 °C in any case.

According to a preferred embodiment of the present disclosure, the security means applicable to the ESS security management system as described above may set the most secure state as default and may be operated in the default state when power is cut off.

Therefore, the ESS security management system of the present disclosure cannot be manipulated using the network if the switch is operated in response to unauthorized access to or abnormal states of the ESS.

Therefore, it is necessary to enter the ESS space and raise the switch to operate the ESS again.

In addition, dual-domain may be basically constituted by a network switch and a physical switch, and stability may be further increased by installing another switch that cannot be restored through the network.

The controller that recognizes an emergency may physically disconnect the physical domains from each other by immediately lowering the switch under control thereof, and a nominal open type switch may be used to enable physical blocking in a power failure situation.

According to a preferred embodiment of the present disclosure, the system may include a detection system for detecting a measurement error of a PCS and a BMS including:
a step of measuring the voltage of each battery from the BMS and measuring and recording the overall voltage in the PCS;
a step of estimating the overall voltage of the system by accumulating the measured voltages of each battery;
a step of comparing the estimated overall voltage of the system to the measured overall voltage; and
a step of transmitting an error signal if the difference between the two voltages of each battery is a certain level or more.

In this way, measurement errors of the PCS and the BMS may be preferably detected.

The present disclosure includes an error detection system for ESS security management including the detection system.

According to a preferred embodiment of the present disclosure, one or more of a step of measuring and recording the overall battery voltage from the PCS and a step of comparing the overall battery voltages measured from the BMS and the PCS to each other may be further included.

According to a preferred embodiment of the present disclosure, the security means applied in the ESS security management system may typically be a network switch and a physical switch presented as dual domains, but, for example, one or more of an operational fixing means and a power cut-off device may be included in addition to the switch means.

While the system of the present disclosure has been described with a focus on the overall battery voltage, the system is preferably applicable to other measured values.

As an example, according to a preferred embodiment of the present disclosure, the system may be implemented as several systems, such as a system for transmitting an error signal when data such as temperature/humidity measured in physical domain 1 and data measured in physical domain 2 exceed a certain level, a system for measuring the amount of current between the physical domains and, if the difference in the amount of current occurs rapidly in a certain period, detecting the same as electric leakage and transmitting an error signal, and a system for accumulating the amount of electric power for a certain period of time and, if the accumulated amount differs from the value recorded by an actual integrating meter, correcting the same. Therefore, the system may be applied as one or more of these applicable systems.

In addition, the system may be provided with a means configured to transmit an error signal, for example, in a situation where the fastening structure of the busbar is loosened and the current is not properly supplied or the contact resistance rises rapidly and to enable measurement of the location where the error occurs, for example, as a point where the differential value thereof changes significantly through integration performed in sequence when there is an array of batteries.

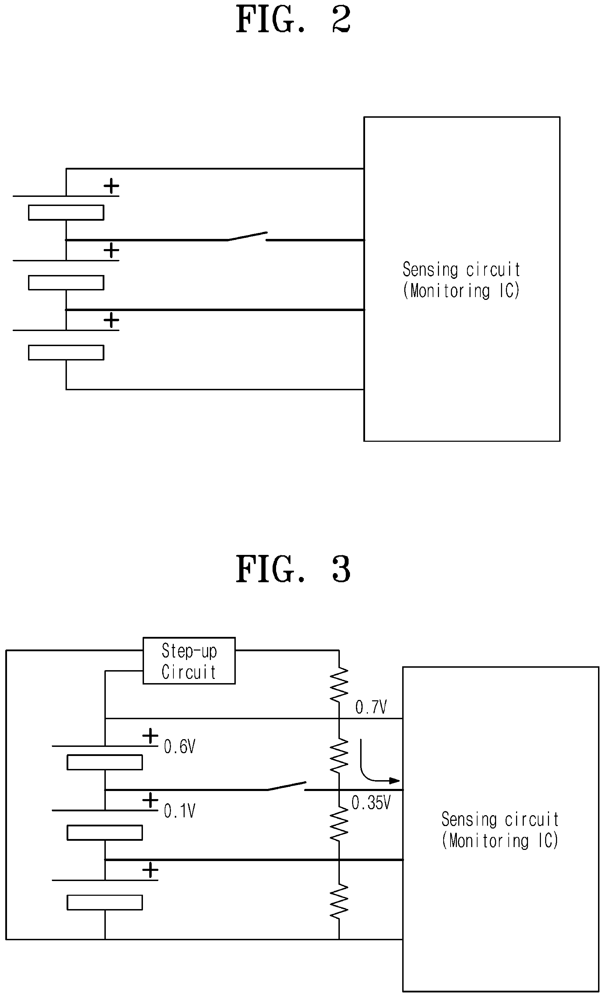

According to a preferred embodiment of the present disclosure, it has been found that, in the event of an open wire due to loosening of the fastening structure of the busbar as shown in FIG. 2, the voltage input to a sensing circuit may become unknown. Therefore, due to this problem, it was recognized that, if the voltage is accumulated (integrated) one by one, determination as to whether the voltage is normal or not depends on the constituting circuit. That is, in a conventional BMS, when an open wire occurs, the voltage may float up and down, be 0 (zero) V, or be expressed as the maximum voltage that the IC can recognize. Therefore, it has been realized that, in this case, accumulation of the voltage may result in, for example, the battery voltage being out of range, the battery voltage fluctuating significantly; or the battery voltage being recognized as 0 V.

Therefore, in a preferred embodiment of the present disclosure, in consideration of these problems, the open wire determination is performed by logic, whereby, for example, a busbar open detection system may be designed such that, when an open wire occurs, the upper cell voltage is applied to the sensing IC to generate a high voltage and the resistance is a few MΩ so as not to affect functions other than open wire detection.

This configuration may be realized, for example, as a configuration including a step-up circuit as shown in FIG. 3. Here, the open wire determination condition is that the upper cell voltage of the cell where the open wire occurred is applied to an installed resistor and the voltage is distributed according to the resistance ratio and applied to the lower cell input line. For example, the system may include a configuration such that the lower cell operates as an open wire at 0.1 V when resistors having the same value are installed, and when the upper cell is 0.6 V, the upper cell is recognized as 0.7 V, and the lower cell is recognized as an open wire when the lower cell is 0.35 V, which is half the voltage of the upper cell.

In addition, the system of the present disclosure may be applied to similar systems of small, medium, or large size by modifying, adding, excluding, integrating some of the components.

According to a preferred embodiment of the present disclosure, the security management system as described above may further include a means configured to analyze information about energy use or loss by determining the history of use or consumption of power transmitted from the ESS. The power usage information analysis means may solve problems caused by abnormality in the power transmitted from the ESS and the difference between actually used power consumed by a user who uses the transmitted power and the power transmitted.

According to a preferred embodiment of the present disclosure, the power usage information analysis means may remedy the problem by analyzing, detecting, and warning of abnormality between the transmitted power and the used power in a situation where the electric vehicle charging market is growing rapidly and the technical understanding of electric vehicle users is developing simultaneously.

In particular, conventionally, due to the low cost of charging electric vehicles, users tended to pay as requested without giving much thought to the charging method of the charger, but in recent years, as the use of electric vehicle charging stations with the ESS has gradually increased and electricity charging fees have increased, information about the charging system has been shared, and users have begun to recognize that the amount of charge provided by the charger may be different from the amount of charge actually stored in the vehicle battery, which may be an appropriate means to solve this problem.

In general, the power transmitted from the charger of the ESS may be used for various purposes, including use as power to drive the vehicle or as the actual amount of charge stored in the electric vehicle battery, use as power consumed for battery conditioning including one or more of heating, cooling, and balancing, loss between the charger and the electric vehicle; use as auxiliary power when using equipment such as vehicle to load (V2L), and electric leakage or electric conduction. Due to one or more of these factors, problems may arise when usage power or loss power other than the actual power charged to the electric vehicle battery is charged to the charger user who charges the electric vehicle battery.

According to a preferred embodiment of the present disclosure, the power usage information analysis means, which may be further applied, may be utilized as a system that may be managed to distinguish or analyze one or more of, for example, driving power, heater power, BMS balancing power, V2L power, external leakage loss power such as electric leakage and electric conduction, and to bill only the pure driving power applied to actual charging by the user through such analysis results.

Therefore, according to a preferred embodiment of the present disclosure, the present disclosure may include a charging state information analysis means configured to distinguish or analyze one or more of driving power, heater power, BMS balancing power, V2L power, and external leakage loss power and to perform charging stop and charging state control based on such analysis results.

According to a preferred embodiment of the present disclosure, the power usage information analysis means may check power usage information and utilize or accumulate data by installing, for example, a power usage measurement device, a controller, a monitoring means, a sensor, etc. at a necessary location of the charger of the ESS.

According to a preferred embodiment of the present disclosure, the power usage information analysis means may perform measures such as stopping charging or preventing power leakage in the event of unexpected discrepancy between the measured values obtained from the power usage measurement device or the like.

In addition, according to a preferred embodiment of the present disclosure, the security management system and the power usage information analysis means of the present disclosure may provide information such as stopping charging or proceeding with charging in the event of a difference equal to or greater than a set threshold for a set period of time by comparing the electric power received by the electric vehicle and the electric power transmitted from the charger, and if the difference is small, a means configured to prevent the electric power from being used for other purposes may be further applied.

According to a preferred embodiment of the present disclosure, in a specific case, a means configured to compare an estimated charging time for completion of charging and an actual charging time based on an input value intended to be charged by a user may be further applied, and information obtained from the comparison data may be used.

According to a preferred embodiment of the present disclosure, leakage power checking and reasonable charging may be possible based on the comparison data.

In addition, according to another preferred embodiment of the present disclosure, the amount of power used for the battery heater of the ESS, if any, may be managed, for example by using the correlation between the current air temperature and the battery temperature and warning if it is used above a certain level.

In addition, for example, battery balancing for the ESS may be managed by setting an expected maximum balancing power based on the maximum balancing current and warning if it is exceeded.

Furthermore, management may include warning when the difference between the sum of the power used and the amount output from the charger is equal to or greater than a predetermined level. Such management may enable security management by pre-checking for electric leakage, electric conduction, and the like.

According to a preferred embodiment of the present disclosure, when various forms of warning occur as described above, for example, after stopping charging, information about the abnormal situation may be input to a central controller for follow-up. In another example, in order to minimize the occurrence of abnormality, for example, a system configured such that two or more measurement devices or the like are installed and a plurality of information obtained therefrom is compared may be established.

In this way, the ESS security management system according to the present disclosure may prevent issues such as fire or explosion from occurring when the ESS deviates from the operating conditions.

In addition, even if the environment temperature, battery temperature, battery voltage, charging and discharging conditions, etc. are remotely managed as the operating conditions of the ESS, it is possible to prevent accidents in advance by responding to various security vulnerabilities, such as the problem that the operating conditions are incorrectly entered due to external factors such as network hacking, whereby the system may be useful as a security management system for stable ESS operation.

Furthermore, if the power usage information analysis means is further applied to the security management system of the present disclosure, it is possible to detect power usage other than the actual power used, loss, electric leakage, electric conduction, etc. to enable reasonable management by adjusting the contents of billing or stopping charging.

## Claims

1. An ESS security management system having:
a monitoring means configured to observe a state of an ESS; and
a security means configured to block or stop an operation of the ESS in another domain separate from a network switch in response to unauthorized access to or an abnormal state of the ESS.

2. The ESS security management system of claim 1, wherein the monitoring means comprises two or more monitoring levels having different monitoring ranges, the monitoring levels being connected to each other via a network communication line, the monitoring levels having functions of transmitting and receiving signals or giving or enforcing commands.

3. The ESS security management system of claim 2, wherein the monitoring levels comprise: level 1 comprising a module BMS directly connected to a plurality of battery cells; level 2 comprising a pack BMS in which one or more module BMSs of level 1 are connected to each other; level 3 comprising a system BMS in which one or more pack BMSs of level 2 are connected to each other and comprising a power management system (PMS) configured to control one or more of heating and cooling, load, and grid; and level 4 comprising one or more of level 3 and comprising an energy management system (EMS) configured to control one or more of an ESS and a power system in various regions.

4. The ESS security management system of claim 3, wherein level 1, level 2, or level 3 regulates a battery, and, in a safest state, current is minimized and voltage is fixed within a battery safe voltage range.

5. The ESS security management system of claim 3, wherein the module BMS of level 1 is configured such that the plurality of battery cells is connected to each other in series, and performs a function of monitoring battery cell states of one or more of voltage, current, and temperature of the battery cells, performing cell balancing, collecting and checking state information data of the battery cells, and transmitting the collected information data of the battery cells to level 2, which is a higher level.

6. The ESS security management system of claim 3, wherein the pack BMS of level 2 comprises a function of receiving information data about the battery cells from the plurality of module BMSs of level 1, performing state determination and transmitting state determination result data to level 3, which is a higher level, and receiving a command for performing balancing for the battery cells from the system BMS of level 3 and commanding execution thereof to the module BMS of level 1, which is a lower level.

7. The ESS security management system of claim 3, wherein level 3 comprises a plurality of system BMSs to constitute a PMS, the PMS comprises a PCS, and each system BMS comprises a function of analyzing information transmitted from the pack BMS of each lower level to determine whether to perform balancing of the battery cells, transmitting the same to each pack BMS of level 2 to perform a balancing command, and commanding a switch connected to the pack BMS to be turned on/off.

8. The ESS security management system of claim 3, wherein the PMS of level 3 comprises a function of receiving information from a PCS and a plurality of system BMSs, receiving information about an abnormal state comprising an alarm situation and having an authority to reset an alarm, receiving information of each enclosure unit to perform activation and deactivation for maintaining a normal state of a battery system, such as balancing, and transmitting the collected information to the EMS.

9. The ESS security management system of claim 3, wherein level 4 comprises an EMS comprising a plurality of PMSs, and comprises a function of checking cooling and heating, load, and grid states connected to the EMS, performing an ESS utilization strategy, and transmitting a necessary command to the PMSs of a lower level connected in parallel, each EMS transmitting a command to a PCS through the plurality of PMSs.

10. An ESS security management system having a monitoring means configured to observe a state of an ESS and a security means configured to block or stop an operation of the ESS in another domain separate from a network switch in response to unauthorized access to the ESS, the ESS security management system comprising:
a first battery management system configured to manage a plurality of battery cells;
a second battery management system located upstream of the first battery management system, the second battery management system being configured to provide control to the first battery management system;
a network communication line configured to provide signal connection between a power grid, a battery, the second battery management system, and the first battery management system; and
a dual domain switch control system connected to the network communication line, the dual domain switch control system being configured to selectively block unauthorized access to or abnormal operation of at least one of the first battery management system and the second battery management system.

11. The ESS security management system of claim 10, wherein the first battery management system comprises one or more module BMSs, and the first battery management system comprises one or more pack BMSs connected to the one or more module BMSs, one or more system BMSs connected to the one or more pack BMSs, or a PMS connected to the one or more system BMSs.

12. The ESS security management system of claim 10, wherein the dual domain switch control system comprises:
a network switch operated in response to a command transmitted through the network communication line, the network switch being configured to control at least one of the first battery management system and the second battery management system; and
a physical switch configured to detect an abnormal operation related to potential unauthorized access and to physically block or prevent power from being applied to at least one of the first battery management system and the second battery management system without transmitting a command through the network communication line.

13. The ESS security management system of claim 10, wherein activation of the physical switch prevents activation of the network switch, deactivation of the physical switch allows reactivation of the network switch, or activation of the physical switch prevents both activation and reactivation of the network switch.

14. The ESS security management system of claim 10, wherein at least one of the first battery management system and the second battery management system is designed so as to be connected to a PCS configured to compare overall battery voltages measured to determine potential unauthorized access or abnormality and to cooperate with the PCS.

15. The ESS security management system of claim 10, wherein at least one of the first battery management system and the second battery management system is designed to further cooperate with a PCS to compare at least one of measured environmental temperature, humidity, a sudden increase in environmental factors, current power usage for a certain period of time, and overall power usage in order to determine potential unauthorized access or an abnormal operation.

16. The ESS security management system of claim 10, wherein the first battery management system, the second battery management system, the network communication line, and the dual domain switch control system are implemented in an ESS capable of supporting use of a vanadium-based battery.

17. The ESS security management system of claim 10, wherein, in at least one of the first battery management system and the second battery management system, an open circuit voltage (OCV) decreases as a temperature increases and the OCV increases as the temperature decreases.

18. The ESS security management system of claim 10, wherein performing cell balancing by a controller comprises actively or passively balancing state-of-charge (SoC) values and performing thermal management on a vanadium-based battery cell to increase a temperature of a vanadium-based battery by at least 5 °C in order to observe battery improvement.

19. The ESS security management system of claim 10, wherein thermal management is performed by a controller in a vanadium-based battery cell so as to maintain an optimal operating efficiency temperature range of 15 to 40 °C and so as not to exceed 50 °C in any case.

20. An error detection system for ESS security management in an ESS security management system having a monitoring means configured to observe a state of an ESS and a security means configured to block or stop an operation of the ESS in another domain separate from a network switch in response to unauthorized access to or an abnormal state of the ESS, wherein the error detection system detects a measurement error of a PCS and a BMS comprising:
measuring and recording a voltage of each battery from a module BMS configured to manage battery cells constituting the ESS and an overall voltage in the PCS;
estimating an overall voltage of the system by accumulating the measured voltages of each battery;
comparing the estimated overall voltage of the system to the measured overall voltage; and
transmitting an error signal if a difference between the two battery voltages of the comparison target is a certain level or more.

21. The error detection system of claim 20, further comprising one or more of measuring and recording the overall battery voltage from the PCS and comparing the overall battery voltages measured from the BMS and the PCS to each other.

22. The error detection system of claim 20, wherein the system is applied as one or more of a system for transmitting an error signal when state data comprising one or more of a temperature and humidity of the battery measured in physical domain 1 and data measured in physical domain 2 exceed a certain level, a system for measuring an amount of current between the two physical domains and, if a difference in the amount of current occurs rapidly in a certain period, detecting the same as electric leakage and transmitting an error signal, and a system for accumulating the amount of electric power for a certain period of time and, if the accumulated amount differs from a value recorded by an actual integrating meter, correcting the same.

23. The error detection system of claim 20, wherein the system comprises a means configured to transmit an error signal in a situation where a fastening structure of a busbar is loosened and current is not properly supplied or contact resistance rises rapidly.

24. The error detection system of claim 20, wherein a location where the error occurs is measured as a point where a differential value thereof changes significantly through integration in order when there is an array of batteries.

25. The ESS security management system of claim 1 or 10, comprising a system designed such that, when an open wire occurs, an upper cell voltage or an output voltage of a step-up circuit is distributed according to a resistance ratio and applied to a sensing IC, the resistance being a few MΩ so as not to affect functions other than open wire detection as an open detection system of a busbar.

26. The ESS security management system of claim 25, comprising a configuration comprising the step-up circuit.

27. The ESS security management system of claim 25, wherein an open wire determination condition comprises an upper cell voltage of a cell where the open wire occurred being applied to an installed resistor and the voltage being distributed according to the resistance ratio and applied to a lower cell input line.

28. The ESS security management system of claim 25, comprising a configuration such that a lower cell operates as an open wire at 0.1 V when resistors having the same value are installed, and when an upper cell is 0.6 V, the upper cell is recognized as 0.7 V, and the lower cell is recognized as an open wire when the lower cell is 0.35 V, which is half the voltage of the upper cell.

29. The ESS security management system of claim 1 or 10, comprising a charging state information analysis means configured to distinguish or analyze one or more of driving power, heater power, BMS balancing power, V2L power, and external leakage loss power and to perform charging stop and charging state control based on an analysis result.
